Europäisches Patentamt

European Patent Office

Office européen des brevets

(11) Veröffentlichungsnummer: **0 246 193**
**A2**

(12) **EUROPÄISCHE PATENTANMELDUNG**

(21) Anmeldenummer: **87810293.8**

(22) Anmeldetag: **11.05.87**

(51) Int. Cl.⁴: **C 09 B 3/00**
C 09 B 5/00

(30) Priorität: **15.05.86 CH 1972/86**

(43) Veröffentlichungstag der Anmeldung:
**19.11.87 Patentblatt 87/47**

(84) Benannte Vertragsstaaten: **CH DE FR GB LI**

(71) Anmelder: **CIBA-GEIGY AG**
**Klybeckstrasse 141**
**CH-4002 Basel (CH)**

(72) Erfinder: **Blattner, Rudolf, Dr.**
**Rheinmattenweg 14**
**D-7888 Rheinfelden 4 (DE)**

(54) Verfahren zur Herstellung von anthrachinoiden Zwischenprodukten und Küpenfarbstoffen.

㉗ Ein neues Verfahren zur Herstellung von anthrachinoiden Zwischenprodukten und Küpenfarbstoffen aus geeigneten Vorprodukten mittels alkoholischer Alkalischmelze wird beschrieben. Das Verfahren besteht darin, dass man von Benzanthron-, Pyrazolanthron- oder Anthrachinon-Derivaten ausgeht und die Umsetzung in einer mit Knetwirkung arbeitenden Maschine und in Gegenwart eines Alkalimetallhydroxids und eines aliphatischen Alkohols mit einem Siedepunkt von < 120°C bei erhöhter Temperatur unter Dimerisierung oder Ringschlussbildung durchführt, wobei mit einem Gewichtsverhältnis von Alkalimetallhydroxid zu eingesetztem Benzanthron-, Pyrazolanthron- oder Anthrachinon-Derivat von < 1:1 gearbeitet wird.

Nach diesem Verfahren lassen sich anthrachinoide Zwischenprodukte, die zu Farbstoffen weiterverarbeitet werden können, sowie Küpenfarbsind, in guter Qualität herstellen.

EP 0 246 193 A2

## Beschreibung

Verfahren zur Herstellung von anthrachinoiden Zwischenprodukten und Küpenfarbstoffen

Die vorliegende Erfindung betrifft ein Verfahren zur Herstellung von anthrachinoiden Zwischenprodukten und Küpenfarbstoffen mittels alkoholischer Alkalischmelze von geeigneten Vorprodukten.

Die Herstellung von anthrachinoiden Zwischenprodukten und Küpenfarbstoffen in alkoholischer Alkalischmelze ist z.B. aus Ullmanns Encyclopädie der Technischen Chemie, Bd. 3 [1953], Seiten 719-724 bekannt. Die dort beschriebenen Verfahren setzen jedoch den Einsatz überaus grosser Alkali- und Lösungsmittelmengen voraus, was ökonomisch und ökologisch besonders ungünstig ist.

Man benötigt gemäss der US-A 3,418,321 weniger Alkali, wenn man entsprechende Umsetzungen in Gegenwart eines oberhalb 125°C siedenden hydroxygruppenhaltigen Lösungsmittels in einer Kugelmühle durchführt, in der das Reaktionsgemisch ständig fein gemahlen wird.

Es wurde nun gefunden, dass man überraschend mit besonders geringen Alkalimetallhydroxid-Mengen auskommt, wenn man ensprechende Umsetzungen in Gegenwart eines aliphatischen Alkohols in einer mit intensiver Knetwirkung, jedoch ohne Mahlwirkung, arbeitenden Maschine durchführt.

Die Erfindung betrifft dementsprechend ein Verfahren zur Herstellung von anthrachinoiden Zwischenprodukten und Küpenfarbstoffen aus gegebenenfalls substituierten Benzanthron-, Pyrazolanthron- oder Anthrachinon-Derivaten in Gegenwart eines Alkalimetallhydroxids und eines aliphatischen Alkohols mit einem Siedepunkt von <120°C bei erhöhter Temperatur unter Dimerisierung oder Ringschlussbildung, dadurch gekennzeichnet, dass man die Umsetzung mit einem Gewichtsverhältnis von Alkalimetallhydroxid zu eingesetztem Benzanthron-, Pyrazolanthron- oder Anthrachinon-Derivat von < 1:1 in einer mit Knetwirkung arbeitender Maschine durchführt.

Bei dem Alkalimetallhydroxid handelt es sich z.B. um Kaliumhydroxid, Natriumhydroxid, oder vorzugsweise um ein Gemisch aus Kaliumhydroxid und Natriumhydroxid.

Wird ein Gemisch aus beiden Hydroxiden verwendet, setzt man Kaliumhydroxid und Natriumhydroxid in einem Gewichtsverhältnis von 50:50 bis 99:1, vorzugsweise von 60:40 bis 90:10 und besonders bevorzugt von 70:30 bis 80:20, ein.

Das Gewichtsverhältnis von Alkalimetallhydroxid zu salzfreiem Ausgangsprodukte, welches ein Benzanthron-, Pyrazolanthron- oder Anthrachinon-Derivat ist, beträgt vorzugsweise zwischen 0,5:1 und 0,95:1 und besonders bevorzugt zwischen 0,55:1 und 0,9:1.

Der benutzte aliphatische Alkohol hat einen Siedepunkt < 120°C. In Frage kommen insbesondere $C_1$-$C_4$-Alkanole, z.B. Methanol, Ethanol, n- oder iso-Propanol oder n-, iso-oder tert.-Butanol. Besonders bevorzugt verwendet man Ethanol, Isopropanol und insbesondere Methanol. Es kommen auch Mischungen dieser Alkohole in Frage.

Das Verfahren wird z.B. mit der 1- bis 4-fachen, vorzugsweise 1,5-bis 3-fachen, Gewichtsmenge Alkohol, bezogen auf das Alkalimetallhydroxid, durchgeführt. Der grösste Teil davon, z.B. 90 % des eingesetzten Alkohols, kann leicht während und nach der Umsetzung wiedergewonnen werden und steht dann für weitere Ansätze zur Verfügung. Die Umsetzung erfolgt vorteilhafterweise bei einer Temperatur von 120 bis 200°C, vorzugsweise 125 bis 150°C.

Unter Maschinen, die mit Knetwirkung arbeiten, sind solche zu verstehen, die zum Mischen, Dispergieren oder Homogenisieren geeignet sind und die flüssig/feste Komponenten unter hoher Krafteinwirkung miteinander verarbeiten können. Hierbei geht die Verarbeitung (Knetung) in üblicher Weise so vor sich, dass gleichläufige oder gegenläufige, bevorzugt mit verschiedenen Geschwindigkeiten laufende Teile der Maschine, wie Rollen, Scheiben, Walzen, eng ineinander greifende Zahnräder und Schnecken, die Komponenten, gegebenenfalls unter Anwendung von Scherkräften, miteinander vermischen. Solche Maschinen mit Knetwirkung sind neben den eigentlichen Knetern und Extrudern selbst beispielsweise Sägezahnrührer (Dissolver), Dispergiermaschinen und Walzenstühle. Diese Maschinen können diskontinuierlich oder kontinuierlich arbeiten; sie sind in grosser Zahl in handelsüblicher Form bekannt.

Für das Verfahren sind z.B. folgende Apparatetypen geeignet: Schaufeltrockner (mit Schlagstangen), schnellaufende Schaufeltrockner (mit Messerköpfen oder eingebauten Stiftmühlen), Ein- oder Mehrwellenschneckenmaschinen, Allphasentrocknerreaktoren oder Trogkneter mit Selbstreinigung.

Insbesondere geeignet für das Verfahren sind Misch- und Knetreaktoren vom Typ "Drais T-Reaktor", "Lödige Druvatherm", "List AP6 Batch", "List Discotherm B", "Turbo-Sphere" oder "Héliglobe".

Nicht geeignet für das Verfahren sind Kugelmühlen und ähnliche überwiegend mit starker Mahlwirkung arbeitenden Maschinen, da diese nicht in der Lage sind, flüssig/feste Reaktionsgemische, wie sie nach dem erfindungsgemässen Verfahren anfallen, ausreichend zu dispergieren oder zu homogenisieren. Ausserdem ist ihre Anwendung an bestimmte Lösungsmittel, die beispielsweise einen Siedepunkt von oberhalb 125°C haben, gebunden.

Als Ausgangsprodukte für das erfindungsgemässe Verfahren kommen besonders Benzanthron-, Pyrazolanthron- oder Anthrachinon-Derivate in Frage, z.B. unsubstituiertes oder einfach oder mehrfach mit Amino, Benzamido, Halogen oder Methoxy substituiertes Benzanthron oder Pyrazolanthron; weiterhin Di-(benzanthron-3-yl)-sulfid, 2-(Benzanthron-3-yl)-pyrazolanthron, Anthrimide, die sich vom Benzanthron ableiten, 1- oder 2-Aminoanthrachinon oder 2,2'-Dimethyl-dianthrachinon-1,1'-diyl.

Handelt es sich bei dem Ausgangsprodukt um gegebenenfalls substituiertes Benzanthron oder Pyrazolanthron, so ist dieses jeweils bevorzugt unsubstituiert oder mit 1 oder 2 Amino-, Methoxy- oder Chlorresten substituiert; im Fall von Aminosubstituenten können diese nachträglich weiter umgesetzt werden, z.B. benzoyliert werden. Das Benzanthron oder Pyrazolanthron ist besonders bevorzugt unsubstituiert.

Handelt es sich bei dem Ausgangsprodukt um ein Anthrimid, so wird dieses vorzugsweise in an sich bekannter Weise aus halogeniertem Benzanthron und gegebenenfalls weitersubstituiertem 1-Aminoanthrachinon erhalten. Das Benzanthron ist dabei bevorzugt mit 1 oder 2 Chlor- und insbesondere Bromatomen substituiert; ausserdem kommen Gemische von mono- und dichloriertem oder mono-oder dibromiertem Benzanthron in Frage. Das 1-Aminoanthrachinon ist unsubstituiert oder z.B. mit Amino, Benzamido, Halogen oder Methoxy substituiert; anwesende Aminogruppen können gegebenenfalls nach beendeter Alkalischmelze weiter umgesetzt werden, z.B. benzoyliert werden.

Bevorzugt sind solche Anthrimide, die aus mono- oder dibromiertem Benzanthron und unsubstituiertem oder mit Amino oder Benzamido weitersubstituiertem 1-Aminoanthrachinon erhalten werden.

Insbesondere bevorzugt sind die Anthrimide, welche aus 3-Brombenzanthron und 1-Aminoanthrachinon sowie aus 3,9-Dibrombenzanthron und 1-Aminoanthrachinon erhalten werden.

Bei der Umsetzung der Ausgangsprodukte gemäss dem erfindungsgemässen Verfahren tritt z.B. eine Dimerisierung unter Bildung einer neuen C-C-Bindung ein, wofür die Umsetzung von Benzanthron zu 4,4'-Bibenzanthron ein Beispiel ist, oder man erhält einen Ringschluss unter Bildung einer oder zweier neuer C-C- oder C-N-Bindungen; Beispiele für geeignete Ringschluss-Reaktionen sind die Umsetzung von Benzanthron zu Violanthron oder die Alkalischmelze des Anthrimids aus 3-Brombenzanthron und 1-Aminoanthrachinon, bei der ein Küpenfarbstoff mit Acridin-Struktur resultiert. Das Verfahren ist insbesondere für solche Umsetzungen geeignet, welche unter Bildung einer oder zweier neuer C-C-Bindungen ablaufen.

Bei den nach dem erfindungsgemässen Verfahren erhältlichen anthrachinoiden Zwischenprodukten und Küpenfarbstoffen handelt es sich z.B. um 4,4'- Bibenzanthron, 3,3'-Bipyrazolanthron, Indanthron, Pyranthron oder um Benzanthron-Farbstoffe. Unter Benzanthron-Farbstoffen sollen hierbei in Anlehnung an Ullmann's Encyclopedia of Industrial Chemistry Vol A2, VCH Weinheim 1985, Seiten 405-406, z.B. Violanthron, Isoviolanthron oder Farbstoffe der Imidgrün-Reihe verstanden werden, wobei unter Farbstoffen der Imidgrün-Reihe solche zusammengefasst sind, die aus geeigneten zuvor schon genannten Anthrimiden unter Bildung einer Acridin-Struktur erhalten werden.

Das erfindungsgemässe Verfahren eignet sich z.B. für die in der folgenden Tabelle genannten Umsetzungen:

### Tabelle

| Ausgangsprodukt | Endprodukt |
| --- | --- |
| Benzanthron | → 4,4'-Bibenzanthron |
| Pyrazolanthron | → 3,3'-Bipyrazolanthron |
| Benzanthron | → Violanthron |
| Di-(benzanthron-3-yl)-sulfid | → Isoviolanthron |
| 2-(Benzanthron-3-yl)-pyrazolanthron | → Vat Blue 25 (C.I. 70500) |
| Anthrimid aus 3-Brombenzanthron und 1-Aminoanthrachinon | → Vat Green 3 (C.I. 69500) |

Tabelle (Fortsetzung)

| Ausgangsprodukt | Endprodukt |
|---|---|
| Anthrimid aus 3-Brombenzanthron und 1,5-Diaminoanthrachinon (+ anschliessende Benzoylierung) | → Vat Oliv GB (C.I. 69515) |
| Anthrimid aus 3,9-Dibrombenz-anthron und 1-Aminoanthrachinon | → Vat Black 25 (C.I. 69525) |
| Anthrimid aus 3,9-Dibrombenz-anthron und 1-Amino-5-benzamido-anthrachinon und 1-Aminoanthrachinon | → Vat Oliv Brown (C.I. 69530) |
| Anthrimid aus chloriertem Benz-anthron und 1-Aminoanthrachinon | → Vat Grey 2G (US-A 2,456,589) |
| Anthrimid aus chloriertem Benz-anthron und 1-Aminoanthrachinon | → Vat Blue Grey (US-A 3,008,962) |
| 1- oder 2-Aminoanthrachinon | →· Indanthron |
| 2,2'-Dimethyl-dianthrachinon-1,1'-diyl | → Pyranthron |

Bevorzugt lassen sich nach dem erfindungsgemässen Verfahren herstellen: 4,4'-Bibenzanthron aus Benzanthron, Violanthron aus Benzanthron, Isoviolanthron aus Di-(benzanthron-3-yl)-sulfid und Farbstoffe der Imidgrün-Reihe aus den entsprechenden Anthrimiden.

Besonders bevorzugte Ausführungsformen des erfindungsgemässen Verfahrens betreffen die Herstellung von 4,4'-Bibenzanthron aus Benzanthron, diejenige von Violanthron aus Benzanthron und die von 11-(Anthrachinon-1-yl-amino)-anthra[2,1,9-m,n,a]-naphth[2,3,h]-acridin-5,10,15-trion aus 3,9-Bis(anthrachinon-1-yl-amino)-benzanthron.

Bei der Durchführung des Verfahrens geht man z.B. so vor, dass man zunächst das Alkalimetallhydroxid und einen Teil des aliphatischen Alkohols in der mit Knetwirkung arbeitenden Maschine vorlegt und dieses Gemisch bei laufendem Mischwerkzeug auf eine Temperatur von z.B. 120 bis 200°C, vorzugsweise 125 bis 150°C, aufheizt; dabei destilliert vorzugsweise ein Teil des eingesetzten Alkohols ab. Zu der resultierenden Schmelze wird das jeweilige Ausgangsprodukt fest oder vorzugsweise in Form einer Suspension in weiterem aliphatischen Alkohol innerhalb von ca. 1 bis 12 Stunden, bevorzugt innerhalb von 75 bis 180 Minuten, dosiert. Während des Zudosierens sowie während der folgenden Nachreaktionszeit wird die Temperatur im allgemeinen auf dem zu Beginn eingestellten Wert gehalten und aliphatischer Alkohol destilliert vorzugsweise kontinuierlich ab.

Daneben ist es auch praktikabel, das jeweilige Ausgangsprodukt in aliphatischen Alkohol vorzulegen und das Alkalimetallhydroxid zuzugeben bzw. zuzudosieren.

Die Konsistenz des Reaktionsgemisches ist so beschaffen, dass das Gemisch entweder schon zu Beginn nicht mehr in üblichen Rührapparaten, z.B. Rührkesseln, rührbar ist oder aber während der Reaktion nicht rührbar bleibt.

Die Aufarbeitung des Reaktionsgemisches geschieht in an sich bekannter Weise z.B. durch Zugabe von Wasser, Absaugen des Produkts und anschliessende Trocknung. Handelt es sich bei dem Reaktionsprodukt um einen Küpenfarbstoff, so wird der teilweise in der Leuko-Form vorliegende Rohfarbstoff vorteilhaft zunächst in wässrig-alkalischer Suspension z.B. mit Luft, Chlorlauge oder anderen Oxidationsmitteln oxidiert und erst anschliessend abgesaugt und getrocknet.

Das erfindungsgemässe Verfahren bietet gegenüber den bekannten Verfahren zur Herstellung von anthrachinoiden Zwischenprodukten und Küpenfarbstoffen insbesondere ökonomische und ökologische Vorteile. Dies ist vor allem dadurch bedingt, dass man viel weniger Alkalimetallhydroxid benötigt und ausserdem mit nur wenig Lösungsmittel auskommt, da dieses jeweils praktisch vollständig zurückgewonnen werden kann. Ein weiterer Vorteil des Verfahrens, der die Raumzeit-Ausbeute zusätzlich günstig beeinflusst, liegt darin, dass die Reaktion und die Aufarbeitung im selben Apparat erfolgen können.

Nach dem erfindungsgemässen Verfahren lassen sich wertvolle anthrachinoide Zwischenprodukte, die zu Farbstoffen weiterverarbeitet werden können, sowie Küpenfarbstoffe, die sich zum Färben oder Bedrucken von verschiedensten Materialien und insbesondere von Fasern aus natürlicher oder regenerierter Cellulose in Gegenward von Reduktionsmitteln, wie z.B. Dithionit eignen, herstellen. Die erhaltenen Zwischenprodukte und Küpenfarbstoffe sind den konventionell hergestellten qualitativ ebenbürtig ober überlegen.

In den nachfolgenden Beispielen bedeuten Teile Gewichtsteile und Prozente Gewichtsprozente. Die Temperaturen sind in Grad Celsius angegeben.

Beispiel 1: In einem Mischreaktor (Typ Drais-T-Reaktor oder Lödige Druvatherm, Volumen 160 Liter) werden 18 Teile KOH, 7 Teile NaOH und 15 Teile Methanol vorgelegt und bei laufenden Mischwerkzeugen auf 140°C erhitzt. Dabei entsteht eine homogene Schmelze, aus der überschüssiges Methanol abdestilliert wird.

Man dosiert zu dieser Schmelze innerhalb von 100 Minuten eine feinteilige Suspension aus 30 Teilen Methanol und 39 Teilen des Anthrimids, welches durch Ullmann-Reaktion von 1 Aequivalent 3,9-Dibrombenzanthron und 2 Aequivalenten 1-Aminoanthrachinon in Nitrobenzol zugänglich ist (Anthrimid-Gehalt: 72,5 %, den Rest bilden anorganische Salze, z.B. $Na_2CO_3$ und NaBr). Die Reaktionstemperatur wird während des Zudosierens zwischen 140 und 145°C gehalten, sodass ständig überschüssiges Methanol abdestilliert. Nach der Zugabe von ca. 40 % der Suspension geht die Reaktionsmischung über eine hochzähe Phase in den festen krümeligen Zustand über.

Die Reaktionsmischung verbleibt nach beendeter Dosierung noch 1-2 Stunden bei laufenden Mischwerkzeugen im Reaktor und wird danach unter Zugabe von Wasser aufgearbeitet, indem man den teilweise in der Leukoform vorliegenden Rohfarbstoff mit Luft, Chlorlauge oder anderen Oxidationsmitteln in der wässrig-alkalischen Suspension oxidiert und anschliessend absaugt. Nach dem Trocknen ergeben sich 28 Teile eines Farbstoffs, der Baumwolle in einer grau-oliven Nuance färbt. Die Farbstärke, Reinheit und Nuance entsprechen dabei den üblichen Anforderungen.

Das eingesetzte Methanol wird zum grössten Teil wiedergewonnen (ca. 90 %) >

Beispiel 2: Man arbeitet wie im Beispiel 1, verwendet jedoch statt des salzhaltigen Anthrimids 28,5 Teile des gleichen jedoch salzfreien Anthrimids. Die Reaktionsmischung geht erst nach ca. 60 % der Dosierung in den festen Zustand über. Man erhält denselben Farbstoff in etwa gleicher Ausbeute.

Beispiel 3: Man arbeitet wie im Beispiel 1, verwendet jedoch einen Labormischreaktor (Typ Lödige, Volumen 5 Liter), legt in diesem 185 Teile KOH, 65 Teile NaOH und 150 Teile Methanol vor und dosiert 500 Teile Methanol und 620 Teile des salzhaltigen Anthrimids zu. Man erhält 450 Teile desselben Farbstoffs in etwa gleicher Qualität.

Beispiel 4: Man arbeitet wie im Beispiel 3, legt jedoch 125 Teile KOH, 125 Teile NaOH und 150 Teile Methanol im Reaktor vor. Man erhält 450 Teile desselben Farbstoffs in etwa gleicher Qualität.

Beispiel 5: Man arbeitet wie im Beispiel 3, legt jedoch 250 Teile KOH und 150 Teile Methanol im Reaktor vor. Man erhält 450 Teile desselben Farbstoffs in etwa gleicher Qualität.

Beispiel 6: 1300 Teile KOH und 485 Teile NaOH werden in einem Rührkolben mit 5400 Teilen Methanol gelöst. Man gibt 3000 Teile des in Beispiel 1 genannten Anthrimids zu und homogenisiert das Gemisch. Die so erhaltene feinteilige Suspension wird innerhalb von 60 Minuten zu einer Schmelze bestehend aus 150 Teilen KOH, 40 Teilen NaOH und 110 Teilen Methanol, in einem Knetraktor vom Typ "List AP 6 Batch" oder "List Discotherm B" (Volumen 9 Liter) bei 140°C Innentemperatur zudosiert. Das überschüssige Methanol destilliert dabei kontinuierlich ab. Nach beendeter Dosierung lässt man 60 Minuten nachreagieren und arbeitet wie in Beispiel 1 beschrieben auf. Man erhält 2155 Teile desselben Farbstoffs wie in Beispiel 1 in etwa vergleichbarer Qualität.

Beispiel 7: Man arbeitet wie in Beispiel 3, legt jedoch 175 Teile KOH, 75 Teile NaOH und 150 Teile Methanol vor und dosiert eine Suspension aus 500 Teilen Methanol und 460 Teilen des Anthrimids, welches durch Ullmann-Reaktion von 1 Aequivalent 3-Brombenzanthron mit 1 Aequivalent 1-Aminoanthrachinon in Nitrobenzol zugänglich ist, zu. Anschliessend arbeitet man wie in Beispiel 1 beschrieben auf. Nach dem Trocknen ergeben sich 450 Teile eines Farbstoffs, der Baumwolle in einer oliv-grünen Nuance färbt. Die Farbstärke, Nuance und Reinheit entsprechen den üblichen Anforderungen.

**Patentansprüche**

1. Verfahren zur Herstellung von anthrachinoiden Zwischenprodukten und Küpenfarbstoffen aus gegebenenfalls substituierten Benzanthron-Pyrazolanthron- oder Anthrachinon-Derivaten in Gegenwart eines Alkalimetallhydroxids und eines aliphatischen Alkohols mit einem Siedepunkt von < 120°C bei erhöhter Temperatur unter Dimerisierung oder Ringschlussbildung, dadurch gekennzeichnet, dass man die Umsetzung mit einem Gewichtsverhältnis von Alkalimetallhydroxid zu eingesetztem Benzanthron-. Pyrazolanthron- oder Anthrachinon-Derivat von < 1:1 in einer mit Knetwirkung arbeitenden Maschine durchführt.

2. Verfahren gemäss Anspruch 1, dadurch gekennzeichnet, dass eine oder zwei C-C-Bindungen neu geknüpft werden

3. Verfahren gemäss Anspruch 1 oder 2, dadurch gekennzeichnet, das es sich bei dem aliphatischen Alkohol um ein $C_1$-$C_4$-Alkanol handelt.

4. Verfahren gemäss Anspruch 3, dadurch gekennzeichnet, dass es sich bei dem $C_1$-$C_4$-Alkanol um

Methanol, Ethanol oder Isopropanol handelt.

5. Verfahren gemäss einem der Ansprüche 1 bis 4, dadurch gekennzeichnet, dass es sich bei dem Alkalimetallhydroxid um Kaliumhydroxid, Natriumhydroxid oder um ein Gemisch aus Kaliumhydroxid und Natriumhydroxid handelt.

6. Verfahren gemäss Anspruch 5, dadurch gekennzeichnet, dass man Kaliumhydroxid und Natriumhydroxid im Verhältnis von 50:50 bis 99:1, vorzugsweise von 60:40 bis 90:10 und besonders bevorzugt von 70:30 bis 80:20 verwendet.

7. Verfahren gemäss einem der Ansprüche 1 bis 6, dadurch gekennzeichnet, dass das Gewichtsverhältnis von Alkalimetallhydroxid zu Benzanthron-, Pyrazolanthron- oder Anthrachinon-Derivat zwischen 0,5:1 und 0,95:1, vorzugsweise zwishen 0,55:1 und 0,9:1, liegt.

8. Verfahren gemäss einem der Ansprüche 1 bis 7, dadurch gekennzeichnet, dass es sich bei den Benzanthron-, Pyrazolanthron- oder Anthrachinon-Derivaten um gegebenenfalls substituiertes Benzanthron oder Pyrazolanthron, Di-(benzanthron-3-yl)-sulfid, 2-(Benzanthron-3-yl)-Pyrazolanthron, ein Anthrimid, das sich von Benzanthron ableitet, 1- oder 2-Aminoanthrachinon oder um 2,2'-Dimethyl-dianthrachinon-1,1'-diyl handelt.

9. Verfahren gemäss Anspruch 8, dadurch gekennzeichnet, dass das Anthrimid aus halogeniertem Benzanthron und gegebenenfalls weitersubstituiertem 1-Aminoanthrachinon erhalten wird.

10. Verfahren gemäss einem der Ansprüche 1 bis 9, dadurch gekennzeichnet, dass es sich bei den anthrachinoiden Zwischenprodukten und Küpenfarbstoffen um 4,4'-Bibenzanthron, 3,3'-Bipyrazolanthron, Indanthron, Pyranthron oder um Benzanthron-Farbstoffe handelt.

11. Verfahren gemäss einem der Ansprüche 1 bis 10, dadurch gekennzeichnet, dass man 4,4'-Bibenzanthron aus Benzanthron, Violanthron aus Benzanthron, Isoviolanthron aus Di-(benzanthron-3-yl)-sulfid oder Farbstoffe der Imidgrün-Reihe aus den entsprechenden Anthrimiden herstellt.

12. Verfahren gemäss einem der Ansprüche 1 bis 11, dadurch gekennzeichnet, dass man 4,4'-Bibenzanthron aus Benzanthron herstellt.

13. Verfahren gemäss einem der Ansprüche 1 bis 11, dadurch gekennzeichnet, dass man Violanthron aus Benzanthron herstellt.

14. Verfahren gemäss einem der Ansprüche 1 bis 11, dadurch gekennzeichnet, dass man 11-(Anthrachinon-1-yl-amino)-anthra[2,1,9-m,n,a]naphth[2,3-h]acridin-5,10,15-trion aus 3,9-Bis(anthrachinon-1-yl-amino)-benzanthron herstellt.